Europäisches Patentamt

European Patent Office

Office européen des brevets

(19)

(11) Veröffentlichungsnummer: **0 090 871**
**B1**

# (12) EUROPÄISCHE PATENTSCHRIFT

(45) Veröffentlichungstag der Patentschrift:
**07.01.87**

(21) Anmeldenummer: **82102929.5**

(22) Anmeldetag: **06.04.82**

(51) Int. Cl.⁴: **G 01 L 23/10**, G 01 L 5/14

(54) **Hochdruckaufnehmer.**

(43) Veröffentlichungstag der Anmeldung:
**12.10.83 Patentblatt 83/41**

(45) Bekanntmachung des Hinweises auf die Patenterteilung:
**07.01.87 Patentblatt 87/2**

(84) Benannte Vertragsstaaten:
**AT CH DE FR GB LI SE**

(56) Entgegenhaltungen:
**CH - A - 582 353**
**DE - C - 1 096 073**

(73) Patentinhaber: **Kistler Instrumente AG,**
**Eulachstrasse 22, CH-8408 Winterthur (CH)**

(72) Erfinder: **Engeler, Paul, Allmendweg 13,**
**CH-8500 Frauenfeld (CH)**
Erfinder: **Wolfer, Peter, Kirchweg 347, CH-8450 Kl.**
**Andelfingen (CH)**

(74) Vertreter: **Schmidt, Horst, Dr., Patentanwälte Pohlmann**
**& Schmidt Siegfriedstrasse 8, D-8000 München 40 (DE)**

## Beschreibung

Die Erfindung betrifft einen Hochdruckaufnehmer zur Befestigung in einer Montagebohrung eines Bauteiles, mit einem Sensorteil mit einer ein Sensorelement mit dem zu messenden Druck beaufschlagenden Membranpartie und einer in dichtendem Eingriff mit einer Gegenfläche der Montagebohrung bringbaren frontalen Dichtfläche.

Die Messung von Drücken bis $10^9$ Pa ist ein Spezialgebiet, das insbesondere in der Ballistik eine grosse Bedeutung hat. Drücke bis zu $2 \times 10^8$ Pa treten auch bei Einspritzvorgängen an Dieselmotoren auf. Bei neueren Pulsschneidvorgängen wird mit Hydraulik-Druckspitzen bis $4 \times 10^8$ Pa gearbeitet.

Die Erfindung richtet sich insbesondere, jedoch nicht ausschliesslich auf Aufnehmer zur Erfassung derartig hoher Drücke. Ein bevorzugtes Anwendungsgebiet ist daher die ballistische Druckmessung bei der Entwicklung von Geschützen und Munition, um den Druckverlauf während des Abfeuern eines Geschosses zu ermitteln.

Bevorzugt wird heute die Messung auf elektronischem Wege mittels insbesondere piezoelektrischer Aufnehmer. Die Piezomesstechnik ist für dynamische Hochdruckmessungen besonders vorteilhaft, da es das aussergewöhnlich hohe Auflösungsvermögen dieser Aufnehmer gestattet, den Druckverlauf von der Zündung mit Drücken von wenigen Pascal bis zur Verbrennung mit Drücken von bis zu $10^9$ Pa sehr genau zu verfolgen. Zudem erlaubt der Piezoeffekt als Volumeneffekt in Piezokristallen eine Messung, die praktisch verformungslos erfolgt. Die Membranpartien solcher Piezoaufnehmer unterliegen daher grundsätzlich nur minimalen Verformungen, was eine hohe Lebensdauer ermöglicht.

Wegen der kurzzeitigen Druckstösse mit ungewöhnlich hohen Amplituden ist die Abdichtung der Aufnehmer in der Montagebohrung von besonderer Bedeutung. Die kleinste Undichtigkeit kann zu Flammdurchstössen führen, wodurch die Aufnehmer nach wenigen Einsätzen ausglühen können und unbrauchbar werden. Häufig werden als Dichtflächen geläppte Flächen vorgesehen, die zwar keine zusätzlichen Dichtmittel in Gestalt von Dichtringen oder dergl. erfordern, jedoch den Nachteil haben, dass nach jedem Ausbau des Aufnehmers ein Nachläppen erforderlich ist. Auch wurden schon dünne Kupferringe verwendet, die jedoch von den Auflageflächen nur schwierig wieder zu entfernen sind. Besonders vorteilhaft haben sich selbstanpassende Stahldichtringe gemäss der DE-C-17 75 646 erwiesen, welche eine einwandfreie Abdichtung schaffen. Die Anzugsdrehmomente zur Schaffung einer wirksamen Abdichtung sind vergleichsweise hoch und können insbesondere Werte bis 60 Nm betragen, was entsprechende Verformungen der Dichtflächen und anderer empfindlicher Aufnehmerteile mit Auswirkung auf die Messempfindlichkeit zur Folge haben kann. Wegen der erforderlichen hohen Anzugsdrehmomente sind bislang keine Aufnehmer verfügbar, deren Empfindlichkeit durch den Montagevorgang praktisch nicht beeinflusst wird.

Aus der DE-C-1 096 073 ist ein Aufnehmer für normale Belastungen bekannt, bei dem Massnahmen zur Vermeidung einer direkten Auswirkung der von den Einspannorganen ausgehenden Kraftflusslinien auf das Gehäuse des Aufnehmers vorgesehen sind. Diese umfassen eine das Gehäuse umschliessende Haltehülse, die durch eine in eine Montagebohrung einschraubbare Hohlschraube gegen eine Absatzfläche des Aufnehmersgehäuses gepresst wird, um den Aufnehmer in der Montagebohrung zu befestigen. Die Einspannorgane sind in wesentlichem Abstand von der Membranpartie angeordnet, und die Dichtfläche ist gegenüber der Frontseite des Aufnehmers wesentlich in Richtung auf den Grundkörper zurückversetzt. Aus der CH-A-582 353 ist es ferner bekannt, die Dichtfläche an einem als Verdickung des Aufnehmergrundkörpers ausgebildeten starren Montageflansch vorzusehen, der mittels einer Hohlschraube gegen eine Absatzfläche der Montagebohrung gepresst werden kann. Der Montageflansch ist ebenfalls in wesentlichem Abstand vom empfindlichen Sensorteil angeordnet. Damit liegen grundsätzlich andere Verhältnisse wie bei Aufnehmern der eingangs erwähnten Art mit frontaler Abdichtung zum Einbau in Sacklochbohrungen vor.

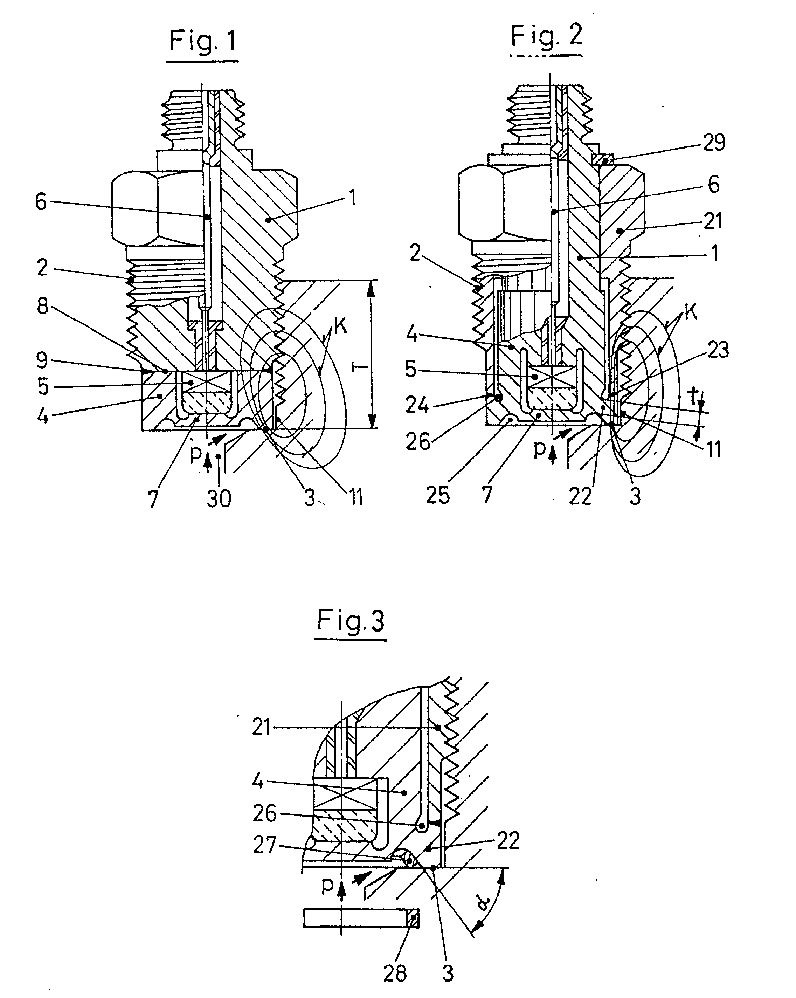

Fig. 1, auf die noch näher eingegangen wird, zeigt dagegen einen typischen bekannten piezoelektrischen Hochdruckaufnehmer mit Frontabdichtung. Die Beeinflussung der Empfindlichkeit des Aufnehmers durch den Montagevorgang rührt daher, dass die durch die Dichtkräfte in den Aufnehmer eingeleiteten Kraftflusslinien den empfindlichen Sensorteil als auch die Trennebene, an der der Sensorteil am Grundkörper anliegt und befestigt ist, durchsetzen. Dies ergibt Spaltfedereffekte im Bereich der Trennebene und Verformungen des Sensorteiles, die sich wiederum auf die die Sensorelemente mit dem Messdruck beaufschlagende Membranpartie des Aufnehmers auswirken. Dies führt dazu, dass jeder Einbau des Aufnehmers in die Montagebohrung eine andere Messempfindlichkeit schafft, so dass es praktisch unmöglich ist, genaue und reproduzierbare Messungen zu erzielen.

Demgegenüber liegt der Erfindung die Aufgabe zugrunde, einen Hochdruckaufnehmer der eingangs erwähnten Gattung zu schaffen, der im wesentlichen unempfindlich gegen unterschiedliche Einspannverhältnisse ist.

Die Lösung dieser Aufgabe bei einer Einrichtung der eingangs genannten Art ist gekennzeichnet durch ein im Bereich der Membranpartie vom Sensorteil abstehender Flanschteil als Träger der frontalen Dichtfläche, der mit einer in die Montagebohrung zur Befestigung des Aufnehmers einschraubbaren Hohlschraube verbunden ist. Vorzugsweise ist der Flanschteil mit der Hohlschraube verschweisst und der Flanschteil mit dem Sensorteil über eine elastische Querschnittsverengung verbunden. Der Flanschteil ist gleichzeitig Träger des Sensorteiles und Mittel zur Abdichtung des Aufnehmers gegenüber der Montagebohrung. Diese Massnahmen verhindern wirksam, dass die im Abdichtungs- und Montagebereich auftretenden Spannkräfte in die Membranpartie bzw. den Sensorteil ausstreuen. Der Flanschteil kann infolge der die Steifigkeit erhöhenden Verschweissung mit der Hohlschraube mit minimaler Dicke ausgebildet werden, um durch Stauchungen der Einspannorgane bedingte Verwerfungen des Sensorteiles minimal zu halten. Eine andere bevorzugte Weiterbildung der Erfindung sieht vor, dass die Hohlschraube den Sensorteil mit Abstand umgibt, so dass eventuelle Verformungen der Hohlschraube ebenfalls keine Auswirkungen auf das Sensorteil haben. Der Flanschteil kann ferner nahe seiner frontalen Dichtfläche eine Aussparung zur Aufnahme eines selbstdichtend verformbaren Dichtringes aufweisen, wie er im Detail in der DE-C-1 775 646 beschrieben ist.

Im Ergebnis wird ein Hochdruckaufnehmer mit Sacklochdichtung geschaffen, der sich insbesondere für die Messung schnell ablaufender Druckvorgänge mit hohen Spitzenwerten eignet und sowohl eine hohe Konstanz der Ansprechempfindlichkeit als auch lange Lebensdauer aufweist, da der Sensorteil und insbesondere die empfindliche Membranpartie des Aufnehmers durch die Dichtkräfte trotz frontaler Abdichtung praktisch nicht belastet wird. Die Empfindlichkeit des Aufnehmers wird weder durch die Höhe des Anziehmomentes beim Einschrauben des Aufnehmers in die Montagebohrung noch durch elastische Randbedingungen oder Alterungseffekte beeinflusst. Damit ist sichergestellt, dass unabhängig von den jeweiligen Einbauverhältnissen sowohl die Messgenauigkeit als auch die Reprodzierbarkeit der Messung unverändert bleiben.

Die Erfindung wird nachfolgend anhand der Zeichnung und einer bevorzugten Ausführungsform unter vorhergehender Bezugnahme auf den Stand der Technik näher erläutert. Es zeigen in geschnittener Ansicht
Fig. 1 einen Hochdruckaufnehmer mit Sacklochdichtung bekannter Bauart,
Fig. 2 einen Hochdruckaufnehmer mit Sacklochdichtung gemäss einer bevorzugten Ausführungsform der Erfindung und
Fig. 3 eine Modifikation des in Fig. 2 gezeigten Aufnehmers
Die in der nachfolgenden Beschreibung verwendeten Begriffe «oben» und «unten» beziehen sich auf die in der Zeichnung wiedergegebene Lagebeziehung der Teile.
Fig. 1 zeigt einen bekannten Hochdruckaufnehmer mit Sacklochdichtung. Diese Dichtungsart ist einfacher herzustellen, hat jedoch den Nachteil, dass die Membranpartie 7 nicht bündig zu der Druckraumoberfläche eingebaut werden kann, so dass stets eine Zuführbohrung 30 notwendig ist. Wegen der geforderten hohen Genauigkeit der vorzunehmenden Bohr-, Flächenläpp- und Gewindeschneidearbeiten werden die diesbezüglichen Spezialwerkzeuge vom Aufnehmerhersteller mitgeliefert.

Wie dargestellt, umfasst der bekannte Aufnehmer einen Grundkörper 1 mit einem Aussengewinde 2 zum Einschrauben in eine Montagebohrung 11 dergestalt, dass die freie untere Stirnfläche 3 eines am Grundkörper befestigten Sensorteiles 4 in dichtendem Eingriff mit einer Absatzfläche der Montagebohrung 11 kommt.

In einer Aussparung im Sensorteil 4 ist, wie dargestellt, ein Sensorelement 5 angeordnet, bei dem es sich vorzugsweise um ein oder mehrere geeignete Piezokristalle handelt, deren elektrische Ladungen über eine durch den Grundkörper 1 geführte Signalleitung 6 nach aussen abgeführt werden. Die freie untere Stirnseite des Aufnehmers wird teilweise durch die innen verdickte Membranpartie 7 gebildet, die das durch den Mediumdruck p erzeugte Drucksignal als Kraft auf das Sensorelement 5 überträgt und vorzugsweise mit dem Sensorteil 4 aus einem Stück gefertigt ist. Das Sensorteil 4 selbst ist mit seiner dem Grundkörper 1 zugewandten oberen Anlagefläche 8 an dem Grundkörper 1, wie bei 9 angedeutet, angeschweisst. Bei der bekannten Aufnehmerbauart wirkt der Mediumdruck p auf die Membranpartie 7 bis zu der Dichtfläche 3.

Die Druckkrafttransformation erfolgt somit in einem äusserst komplexen Gebilde. Die notwendige Anpresskraft der Dichtfläche 3 gegen die Absatzfläche der Montagebohrung wird beim Einschrauben des Grundkörpers in den Bohrungsabschnitt T erbracht. Dazu sind Dichtdrehmomente von 30 ... 60 Nm notwendig. Entsprechend diesen sehr hohen Vorspannkräften entstehen Kraftflusslinien K, wie angedeutet, die sich auch auf das empfindliche Sensorteil erstrecken. Der Mediumdruck p erzwingt eine Änderung der statischen Kraftflusslinien K, die nochmals eine Rückwirkung auf die Aufnehmerempfindlichkeit hat. Einen weiteren wesentlichen Einfluss auf die Membranpartie 7 hat die thermische Komponente eines Gasstosses, die zusätzliche Verspannungen der Membranpartie 7 ergibt, was dynamische Fehler der Messung zur Folge haben kann.

Was bei der Darstellung der Kraftflusslinien K in Fig. 1 nicht zum Ausdruck kommt, sind die Torsionskräfte, die sich ebenfalls vom Gewinde 2 bis zur Dichtfläche 3 erstrecken und den Sensorteil verspannen und damit die Messungen beeinflussen können. Diese Torsionskräfte sind sehr stark von äusseren Bedingungen wie z.B. der Schmierung des Gewindes 2 und dem Modus des Anziehens abhängig und variieren noch stärker als die dargestellten Längs- und Querkräfte K.

Der Sensorteil 4 wird durch die Konstruktion bedingt in der ganzen Höhe von den Kraftflusslinien K und Torsionskräften durchsetzt. Entsprechend ergeben sich erhebliche nachteilige Einflüsse auf die Verspannung des Sensorelementes 5 und der Membranpartie 7. Ein zusätzliches Problem ist die obere grosse Trenn- oder Abstützfläche 8, die je nach Ausführung der Schweissung 9 zu mehr oder weniger Spaltfederung führt, die es möglichst zu vermeiden gilt.
Fig. 2 zeigt einen Hochdruckaufnehmer nach der Erfindung. Der Aufnehmer gemäss der bevorzugten Ausführungsform der Erfindung umfasst wiederum einen Grundkörper 1, der hier jedoch vorzugsweise integral mit dem Sensorteil 4 verbunden ist. Das Sensorteil 4 trägt an seinem unteren Ende eine dem Mediendruck p ausgesetzte Membranpartie 7, die ein im Sensorteil aufgenommenes Sensorelement 5 der in Verbindung mit Fig. 1 beschriebenen Art beaufschlagt. Eine den Grundkörper 1 durchsetzende Signalleitung 6 führt die am Sensorelement 5 entstehenden Ladungen nach aussen ab.

Erfindungsgemäss ist der Grundkörper 1, wie dargestellt, aussen von einer Hohlschraube 21 umgeben, die mit ihrem Aussengewinde 2 relativ weit in die Montagebohrung 11 des zu untersuchenden Bauteils eingeschraubt werden kann. An ihrer unteren Endfläche 23 ist die Montageschraube mit der Oberseite eines flanschartigen, vom Sensorteil 4 horizontal nach aussen abstehenden Flanschteil 22 über eine Schweissnaht 24 fest verbunden. Bei dieser Ausführungsform der Erfindung ist die Dichtfläche 3 an der Unterseite des Flanschteiles 22 vorgesehen. Durch das Vorsehen des Flanschteiles 22 wird an sich schon ein wesentlicher Teil der Kraftflusslinien K vom Sensorteil 4 ferngehalten, doch lässt sich eine weitere Verbesserung dadurch erzielen, dass die Verbindung zwischen Flanschteil 22 und Sensorteil 4 elastisch ausgebildet wird. Hierzu können an geeigneten Stellen zwischen Flanschteil 22 und Sensorteil 4, wie dargestellt, Eindrehungen 25 und 26 eingebracht werden, die eine geschwächte Anbindung des Flanschteiles 22 am Sensorteil 4 schaffen und dadurch verhindern, dass die Kraftflusslinien vom Flanschteil 22 in das Sensorteil 4 ausstreuen.

Das Ausmass, wie stark das Flanschteil 22 durch die Eindrehungen 25 und 26 geschwächt bzw. wieweit die Anbindung zwischen Sensorteil 4 und Flanschteil 22 in der Dicke t verringert werden kann, hängt von dem zu messenden Druck p ab, den es abzudichten gilt, sowie auch von den sonstigen Einsatzbedingungen. Versuche haben gezeigt, dass die Dicke t des Anbindungssteges zwischen Flanschteil 22 und Sensorteil 4 vorzugsweise nicht grösser als etwa 25% des Frontdurchmessers des Aufnehmers betragen sollte.

Ein weiterer Vorteil aus dem Vorsehen einer Hohlschraube 21 liegt darin, dass die Bauhöhe des Flanschteiles 22 und dessen Verbindung zum Sensorteil 4 sehr gering sein kann, wodurch erreicht wird, dass die Kraftflusslinien nur eine kurze Wegstrecke in Nachbarschaft des Sensorteiles 4 verlaufen und dementsprechend auch nur eine geringe Auswirkung auf das Sensorteil 4 bzw. dessen Membranpartie 7 haben können.

Darauf hinzuweisen ist weiter, dass, wie dargestellt, die Hohlschraube 21 den Grundkörper 1 umfänglich nur an einem oberen Bereich berührt, während im Bereich des Sensorteiles 4 zwischen diesem und der Hohlschraube ein Abstand vorgesehen ist, so dass sich irgendwelche Verformungen der Hohlschraube nicht auf den Sensorteil 4 auswirken können. Wie ferner in Fig. 2 zu sehen ist, kann am oberen Bereich des Grundkörpers 1 eine Nut zur Aufnahme eines Sicherungsringes 29 eingebracht sein, der die Montagehohlschraube 21 weiter fixiert.

Darauf hinzuweisen ist ferner, dass bei dem Aufnehmer nach Fig. 2 die Membranpartie 7 bzw. das Sensorteil 4 gegenüber der Dichtfläche 3 nach oben etwas zurückversetzt liegt, wodurch erreicht wird, dass sich das Druckmedium über die ganze Membranpartie 7 verteilen kann und letztere über eine genau definierte Fläche mit dem Messdruck beaufschlagt.

Fig. 3 zeigt in Teilansicht einen modifizierten Hochdruckaufnehmer nach der Erfindung mit Sacklochdichtung. Anstelle der in Fig. 2 gezeigten flachen Dichtfläche 3 ist hier eine solche mit einem schrägen Einstich vorgesehen, der eine Konusfläche bildet, die unter einem geeigneten Winkel $\alpha$ gegenüber der durch die Absatzfläche der Montagebohrung definierten Ebene liegt. Mit dieser Konusfläche kommt beim Einbau des Aufnehmers ein Metalldichtring 27 in Eingriff, der im Detail in der DE-PS 17 75 646 beschrieben ist. Vor dem Einbau handelt es sich bei dem Metalldichtring 27 um einen Rohrabschnitt 28, vgl. Fig. 3 unten, der durch elastische Verformung während des Einbaues die in Fig. 3 gezeigte Konfiguration annimmt und eine einwandfreie Abdichtung auch bei sehr kleinen Anzugsmomenten ergibt. Ausserdem zeigt Fig. 3 in näherem Detail die Ausbildung der elastischen Anbindung des Flanschteiles 22 an dem Sensorteil 4 mittels der Einstiche 25 und 26.

Das erfindungsgemässe Vorsehen einer elastischen Zone zwischen den Spanneinrichtungen und Sensorteilen bewirkt eine einwandfreie Trennung der Einspann- und Dichtkräfte $\lambda$ vom Sensorteil 4. Erfindungsgemäss werden damit Hochdruckaufnehmer geschaffen, die unabhängig von immer wieder wechselnden Einbaubedingungen genaue, unverfälschte Messresultate ergeben.

Es versteht sich, dass die Erfindung anhand der gegebenen Lehre ohne Abweichung von ihrem Schutzbereich abgeändert und modifiziert werden kann. So können z.B. anstelle der bevorzugten Verwendung von Piezokristallen als Sensorelement auch Widerstandmesselemente, wie Dehnungsmessstreifen, oder piezoresistive Sensoren vorgesehen werden.

**Patentansprüche**

1. Hochdruckaufnehmer zur Befestigung in einer Montagebohrung (11) eines Bauteiles, mit einem Sensorteil (4) mit einer ein Sensorelement (5) mit dem zu messenden Druck beaufschlagenden Membranpartie (7) und einer in dichtendem Eingriff mit einer Gegenfläche der Montagebohrung bringbaren frontalen Dichtfläche (3), gekennzeichnet durch einen im Bereich der Membranpartie (7) vom Sensorteil (4) nach aussen abstehenden, die frontale Dichtfläche (3) tragenden Flanschteil (22) der mit einer in die Montagebohrung zur Befestigung des Aufnehmers einschraubbaren Hohlschraube (21) verbunden ist, so dass die bei der Abdichtung des Aufnehmers entstehenden Dichtkräfte im wesentlichen von dem Sensorteil ferngehalten sind.

2. Hochdruckaufnehmer nach Anspruch 1, dadurch gekennzeichnet, dass der Flanschteil (22) mit der Hohlschraube (21) verschweisst ist.

3. Hochdruckaufnehmer nach Anspruch 1 oder 2, dadurch gekennzeichnet, dass der Flanschteil (22) über eine Querschnittsverengung mit dem Sensorteil (4) verbunden ist.

4. Hochdruckaufnehmer nach Anspruch 3, dadurch gekennzeichnet, dass die Dicke (t) der Querschnittsverengung weniger als etwa 25% des frontalen Durchmessers des Aufnehmers beträgt.

5. Hochdruckaufnehmer nach einem der vorhergehenden Ansprüche, dadurch gekennzeichnet, dass die Hohlschraube (21) den Sensorteil (4) mit Abstand umgibt.

6. Hochdruckaufnehmer nach einem der vorhergehenden Ansprüche, dadurch gekennzeichnet, dass der Flanschteil (22) nahe der frontalen Dichtfläche (3) eine Aussparung zur Aufnahme eines selbstdichtend verformbaren Dichtringes (27, 28) aufweist.

## Claims

1. A high pressure transducer for securing in a mounting hole (11) of a structural component comprising a sensor part (4) having a membrane portion (5) for subjecting a sensor element with a pressure to be measured, and a front sealing surface (3) adapted to sealingly engage a counter surface of the mounting hole, characterized by a flange portion (22) outwardly extending from the sensor part (4) and carrying the front sealing surface (3), said flange portion being connected to a hollow screw (21) adapted to be screwed into the mounting hole for securing the transducer whereby the sealing forces caused when sealing the transducer are substantially kept away from the sensor part.

2. The high pressure transducer according to claim 1, characterized in that the flange portion (22) is welded to said hollow screw (21).

3. The high pressure transducer according to claim 1 or 2, characterized in that the flange portion (22) is connected to the sensor part (4) through a portion having a reduced cross section.

4. The high pressure transducer according to claim 3, characterized in that the thickness (t) of the portion having a reduced cross section is less than about 25% of the front diameter of the transducer.

5. The high pressure transducer according to one of the preceding claims, characterized in that the hollow screw (2) surrounds the sensor part (4) with a clearance thereto.

6. The high pressure transducer according to one of the preceding claims, characterized in that the flange portion (22) near its front sealing surface (3) includes a recess for receiving a sealing ring (27, 28) deformeable in a self-sealing manner.

## Revendications

1. Détecteur à haute pression destiné à être fixé dans un orifice alésé de montage (11) d'une pièce mécanique, comportant une partie de détection (4) comprenant une partie membrane (7) sollicitée par la pression à mesurer et agissant sur un élément détecteur (5) et une surface d'obturation frontale (3) pouvant être disposée sur une contre-surface de l'orifice alésé de montage (11) de manière à assurer l'étanchéité de l'ensemble, caractérisé en ce qu'il est prévu, dans la zone de la partie membrane (7), de manière à former la surface d'obturation frontale (3) à la périphérie de la partie de détection (4), une collerette (22) reliée à un boulon creux (21) destiné à être vissé dans l'orifice ablésé de montage (11) en vue de réaliser la fixation du détecteur, de sorte que les lignes fonctionnelles de force générées par le couple de serrage sont substantiellement maintenues à l'écart de la partie de détection, lors du montage étanche du détecteur.

2. Détecteur à haute pression suivant la revendication 1, caractérisé en ce que la collerette (22) est soudée au boulon creux (21).

3. Détecteur à haute pression suivant la revendication 1 ou 2, caractérisé en ce que la collerette (22) est reliée à la partie de détection (4) suivant une réduction de section.

4. Détecteur à haute pression suivant la revendication 3, caractérisé en ce que la réduction de section ou étranglement possède une épaisseur (t) correspondant à environ 25% maximum du diamètre frontal du détecteur.

5. Détecteur à haute pression suivant une des revendications qui précèdent, caractérisé en ce que le boulon creux (21) entoure la partie de détection (4) à une certaine distance de celle-ci.

6. Détecteur à haute pression suivant une des revendications qui précèdent, caractérisé en ce que la collerette (22) présente, à proximité de la surface d'obturation frontale (3), un évidement destiné à recevoir une bague (27, 28) se déformant au moment du montage du détecteur, de manière à assurer l'étanchéité de l'ensemble.

Fig. 1

Fig. 2

Fig. 3